# EUROPEAN PATENT SPECIFICATION

(11) **EP 3 290 639 B1**
(45) Date of publication and mention of the grant of the patent: **04.12.2019**
(21) Application number: 17189481.9
(22) Date of filing: 05.09.2017
(51) Int. Cl.: F01D 25/12, F02K 3/06, F02C 7/18, F01D 5/18, F01D 9/02, F23R 3/00

(54) **IMPINGEMENT COOLING WITH INCREASED CROSS-FLOW AREA**
PRALLKÜHLUNG MIT ERHÖHTEM QUERSTRÖMUNGSBEREICH
REFROIDISSEMENT PAR IMPACT COMPORTANT UNE PLUS GRANDE AIRE À FLUX TRANSVERSAL

(30) Priority: 06.09.2016 US 201615257273
(43) Date of publication of application: 07.03.2018
(73) Proprietor: United Technologies Corporation, Farmington, CT 06032 (US)
(72) Inventor: ROMANOV, Dmitriy A., Wells, ME Maine 04090-2848 (US)
(74) Representative: Dehns

(56) References cited:
- EP-A2- 2 787 174
- WO-A1-2015/095253
- US-A1- 2014 064 913
- US-B1- 6 659 714
- US-B1- 8 449 246

## Description

### BACKGROUND

The subject matter disclosed herein generally relates to gas turbine engines and, more particularly, to impingement cooling with increased cross-flow area for components of gas turbine engines.

Impingement is an effective, widely used type of cooling system that is employed in jet propulsion type systems (e.g., gas turbine engines). Various components of gas turbine engines can benefit from impingement cooling in order to maintain, for example, appropriate operational conditions and/or to maximize component life. For example, impingement cooling may be employed on vanes, blades, combustor panels, and blade outer air seals ("BOAS"). US 6659714 discloses a component to be cooled that includes a baffle cooling plate for impingement cooling. Accordingly, it may be advantageous to provide improved impingement cooling to improve part life or provide other features/benefits.

### SUMMARY

According to some embodiments, impingement assemblies are provided. The assemblies include an impingement plate having an increased cross-flow structure that forms an increased cross-flow area between the impingement plate and an impingement surface when the impingement plate is installed proximate to the impingement surface, a plurality of first portions, each having at least one impingement hole passing through the first portion, the first portion being separated from the impingement surface by an impingement hole height; a plurality of second portions each separated from a first portion by a separation distance and separated from the impingement surface by a cross-flow structure height; and a plurality of third portions, each extending between a first portion and a second portion, wherein each first portion, second portion, and the third portion define at least one cross-flow cavity between the impingement plate and the impingement surface, and the cross-flow structure height is greater than the impingement hole height, characterised in that the increased cross-flow structure includes a plurality of channels defined by the plurality of first portions and the plurality of second portions, wherein a plurality of impingement holes are formed in each of the first portions, and wherein the first portions are continuous portions that extend along a direction of the impingement plate to form a trough in the impingement plate.

In addition to one or more of the features described above, or as an alternative, in further embodiments of the impingement assembly, the at least one channel may be a serpentine channel.

In addition to one or more of the features described above, or as an alternative, in further embodiments of the impingement assembly, the first portion and the second portion may define parallel planes.

In addition to one or more of the features described above, or as an alternative, in further embodiments of the impingement assembly, the third portion may intersect at least one of the first portion or the second portion at a ninety degree angle.

In addition to one or more of the features described above, or as an alternative, in further embodiments of the impingement assembly, the third portion may intersect at least one of the first portion or the second portion at a non-ninety degree angle.

According to other embodiments, components of a gas turbine engines are provided. The components include an impingement surface to be cooling by impingement cooling and an impingement plate positioned proximate the impingement surface, a plurality of first portions, each having at least one impingement hole passing through the first portion, the first portion being separated from the impingement surface by an impingement hole height; a plurality of second portions each separated from a first portion by a separation distance and separated from the impingement surface by a cross-flow structure height; and a plurality of third portions, each extending between a first portion and a second portion, wherein each first portion, second portion, and the third portion define at least one cross-flow cavity between the impingement plate and the impingement surface, and the cross-flow structure height is greater than the impingement hole height, characterised in that the increased cross-flow structure includes a plurality of channels defined by the plurality of first portions and the plurality of second portions, wherein a plurality of impingement holes are formed in each of the first portions, and wherein the first portions are continuous portions that extend along a direction of the impingement plate to form a trough in the impingement plate.

In addition to one or more of the features described above, or as an alternative, in further embodiments of the gas turbine engines, the at least one channel may be a serpentine channel.

In addition to one or more of the features described above, or as an alternative, in further embodiments of the gas turbine engines, the first portion and the second portion may define parallel planes.

In addition to one or more of the features described above, or as an alternative, in further embodiments of the gas turbine engines, the third portion may intersects at least one of the first portion or the second portion at a ninety degree angle.

In addition to one or more of the features described above, or as an alternative, in further embodiments of the gas turbine engines, the third portion may intersect at least one of the first portion or the second portion at a non-ninety degree angle.

In addition to one or more of the features described above, or as an alternative, in further embodiments of the gas turbine engines, the impingement surface may be a surface of an airfoil of the gas turbine engine.

Technical effects of embodiments of the present disclosure include an impingement plate for components of gas turbine engines with improved impingement cooling efficiency. Further technical effects include increased cross-flow structures formed as part of impingement plates that increase a cross-flow area or volume to reduce cross-flow velocity, and thus improve impingement cooling efficiency.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features and advantages of the present disclosure are apparent from the following detailed description taken in conjunction with the accompanying drawings in which:
FIG. 1A is a schematic cross-sectional illustration of a gas turbine engine architecture that may employ various embodiments disclosed herein;
FIG. 1B is a schematic cross-sectional illustration of another gas turbine engine architecture that may employ various embodiments disclosed herein;
FIG. 2 is a schematic illustration of a section of a gas turbine engine that may employ various embodiments disclosed herein;
FIG. 3 is a schematic illustration of an impingement plate positioned relative to an impingement surface of a component of a gas turbine engine;
FIG. 4 is a schematic illustration of an impingement plate in accordance with an embodiment of the present disclosure positioned relative to an impingement surface of a component of a gas turbine engine;
FIG. 5 is a schematic illustration of an impingement plate not embodying the present invention positioned relative to an impingement surface of a component of a gas turbine engine; and
FIG. 6 is a schematic illustration of an impingement plate in accordance with an embodiment of the present disclosure positioned relative to an impingement surface of a component of a gas turbine engine.

### DETAILED DESCRIPTION

As shown and described herein, various features of the disclosure will be presented. Various embodiments may have the same or similar features and thus the same or similar features may be labelled with the same reference numeral, but preceded by a different first number indicating the Figure Number to which the feature is shown. Thus, for example, element "##" that is shown in FIG. X may be labelled "X##" and a similar feature in FIG. Z may be labelled "Z##". Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

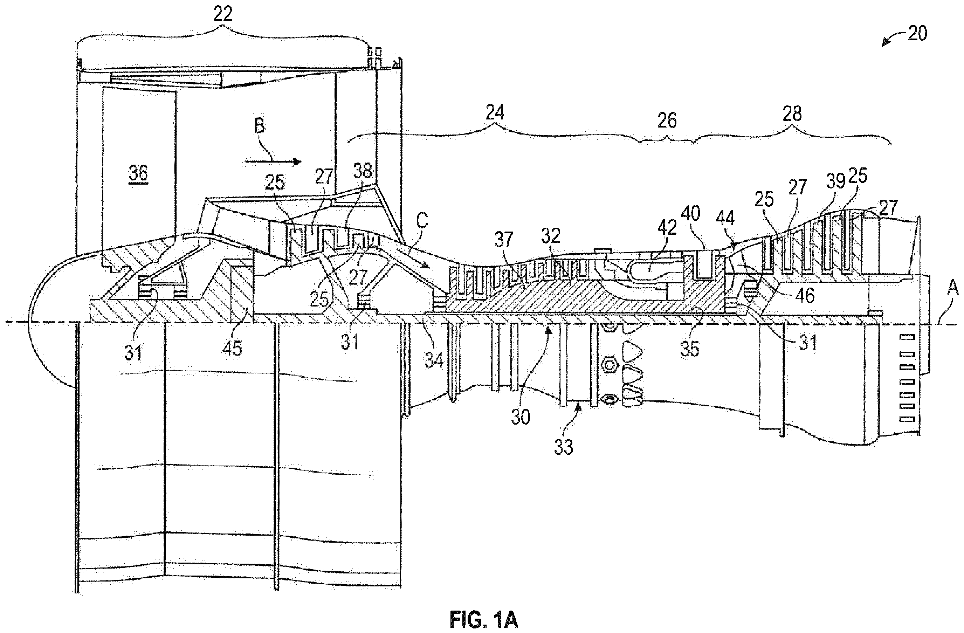

FIG. 1A schematically illustrates a gas turbine engine 20. The exemplary gas turbine engine 20 is a two-spool turbofan engine that generally incorporates a fan section 22, a compressor section 24, a combustor section 26, and a turbine section 28. Alternative engines might include an augmenter section (not shown) among other systems for features. The fan section 22 drives air along a bypass flow path B, while the compressor section 24 drives air along a core flow path C for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centreline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centreline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies add or extract energy from the core airflow that is communicated through the gas turbine engine 20 along the core flow path C. The vanes 27 of the vane assemblies direct the core airflow to the blades 25 to either add or extract energy.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. Example cooling circuits that include features such as airflow bleed ports are discussed below.

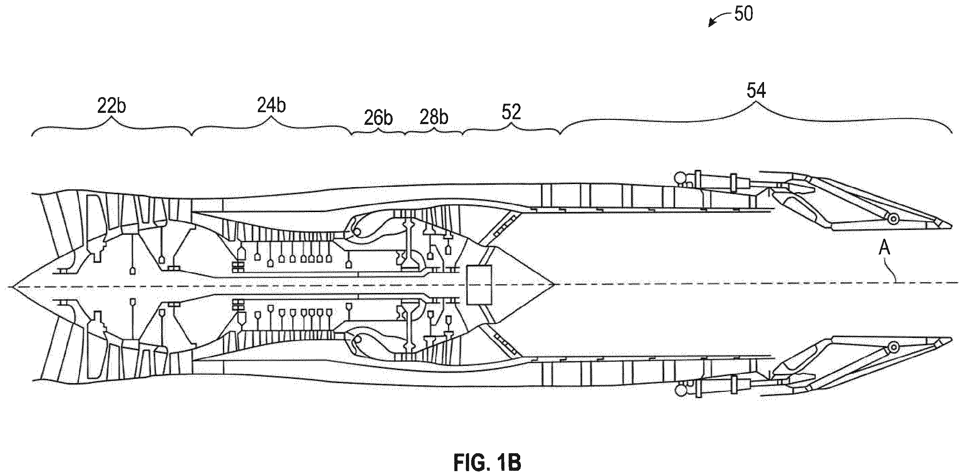

Referring to FIG. 1B, an alternative engine architecture of a gas turbine engine 50 may also include an augmentor section 52 and an exhaust duct section 54 among other systems or features. Otherwise, the engine architecture of the gas turbine engine 50 may be similar to that shown in FIG. 1A. That is, the gas turbine engine 50 includes a fan section 22b that drives air along a bypass flowpath while a compressor section 24b drives air along a core flowpath for compression and communication into a combustor section 26b then expansion through a turbine section 28b.

Although two architectures for gas turbine engines are depicted (e.g., turbofan in FIG. 1A, low bypass augmented turbofan FIG. 1B) in the disclosed non-limiting embodiments, it should be understood that the concepts described herein are not limited to use with the shown and described configurations, as the teachings may be applied to other types of engines such as, but not limited to, turbojets, turboshafts, and three-spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

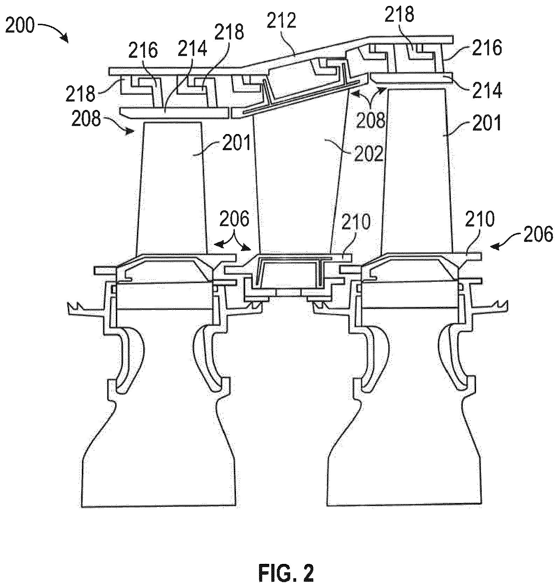

FIG. 2 is a schematic view of a turbine section that may employ various embodiments disclosed herein. Turbine 200 includes a plurality of airfoils, including, for example, one or more blades 201 and vanes 202. The airfoils 201, 202 may be hollow bodies with internal cavities defining a number of channels or cavities, hereinafter airfoil cavities, formed therein and extending from an inner diameter 206 to an outer diameter 208, or vice-versa. The airfoil cavities may be separated by partitions within the airfoils 201, 202 that may extend either from the inner diameter 206 or the outer diameter 208 of the airfoil 201, 202. The partitions may extend for a portion of the length of the airfoil 201, 202, but may stop or end prior to forming a complete wall within the airfoil 201, 202. Thus, each of the airfoil cavities may be fluidly connected and form a fluid path within the respective airfoil 201, 202. The blades 201 and the vanes 202 may include platforms 210 located proximal to the inner diameter thereof. Located below the platforms 210 may be airflow ports and/or bleed orifices that enable air to bleed from the internal cavities of the airfoils 201, 202. A root of the airfoil may connected to or be part of the platform 210.

The turbine 200 is housed within a case 212, which may have multiple parts (e.g., turbine case, diffuser case, etc.). In various locations, components, such as seals, may be positioned between airfoils 201, 202 and the case 212. For example, as shown in FIG. 2, blade outer air seals 214 (hereafter "BOAS") are located radially outward from the blades 201. As will be appreciated by those of skill in the art, the BOAS 214 can include BOAS supports that are configured to fixedly connect or attach the BOAS 214 to the case 212 (e.g., the BOAS supports can be located between the BOAS and the case). As shown in FIG. 2, the case 212 includes a plurality of hooks 218 that engage with the hooks 216 to secure the BOAS 214 between the case 212 and a tip of the blade 201.

Impingement cooling can be used to provide cooling to various components of gas turbine engines, including, but not limited to, blades, vanes, BOAS, combustor panels, etc. Impingement-type cooling can be adjusted or optimized by selecting or defining a specific or desired arrangement of the characteristics or parameters of the impingement holes. For example, impingement hole diameter, impingement hole spacing, and depth-to-diameter ratio of the impingement hole can all be adjusted, selected, or otherwise designed to achieve desired impingement cooling. As known in the art, the impingement hole depth is an important factor for effective cooling and optimal or preferred impingement hole depth may tend toward being small (e.g., a short or shallow impingement hole). However, having a small (e.g., short depth) impingement hole depth can increase cross-flow air velocity that "blows away" impingement jets and therefore reduces impingement effectiveness.

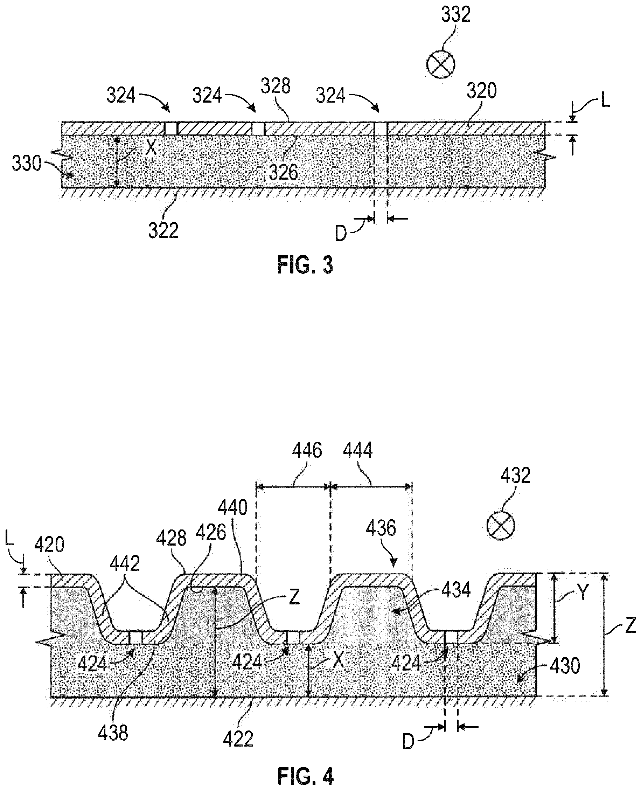

Turning now to FIG. 3, a side view illustration of an impingement plate 320 positioned proximate to an impingement surface 322 is shown. The impingement surface 322 is a surface of a component that is to be cooled (e.g., a surface of an airfoil, a surface of a combustor, a surface of a BOAS, etc.). That is, the impingement plate 320 is positioned about and near the impingement surface 322 to provide cooling to the impingement surface 322. As shown, the impingement plate 320 includes a plurality of impingement holes 324. The impingement holes 324 can be arranged in a grid-like pattern on the impingement plate 320 or may be otherwise arranged or positioned to provide a desired cooling to the impingement surface 322.

The impingement plate 320 has a first surface 326 and a second surface 328, with the impingement holes 324 extending through the impingement plate 320 from the first surface 326 to the second surface 328. The impingement plate 320 has an impingement plate thickness (i.e., the distance from the first surface 326 to the second surface 328) that defines an impingement hole depth L. Further, each impingement hole 324 has an impingement hole diameter D. A cross-flow area 330 is defined between the impingement surface 322 and the first surface 326 of the impingement plate 320. The cross-flow area 330 has an impingement cavity height X that is defined as the distance between the first surface 326 and the impingement surface 322, as shown.

As noted above, typically it is desirable to provide impingement cooling by optimizing the impingement hole diameter D and positioning the impingement plate 320 at a specific impingement hole height X from the impingement surface 322. However, having a small (e.g., short depth) impingement hole depth can increase cross-flow air velocity that "blows away" impingement jets and therefore reduces impingement effectiveness. That is, air flowing within the cross-flow area 330 can reduce the effectiveness of impingement cooling by having too high of a velocity as the cross-flow air passes through the cross-flow area 330. As shown in FIG. 3, the cross-flow air flows in a cross-flow direction 332 such as into and out of the page of FIG. 3.

Turning now to FIG. 4, a side view illustration of an impingement plate 420 in accordance with an embodiment of the present disclosure positioned proximate to an impingement surface 422 is shown. The impingement surface 422 is a surface of a component that is to be cooled. That is, the impingement plate 420 is positioned about and near the impingement surface 422 to provide cooling to the impingement surface 422. As shown, the impingement plate 420 includes a plurality of impingement holes 424. The impingement holes 424 can be arranged in a grid-like pattern on the impingement plate 420 or may be otherwise arranged or positioned to provide a desired cooling to the impingement surface 422.

The impingement plate 420 is similar to the impingement plate 320 of FIG. 3, having an impingement hole depth L defined by a thickness of the impingement plate 420 (e.g., distance through the impingement plate 420 from a first surface 426 to a second surface 428). Each impingement hole 424 has an impingement hole diameter D. Moreover, each of the impingement holes 424 is separated from the impingement surface 422 by the impingement hole height X of a cross-flow area 430. Air flowing through the cross-flow area 430 flows in a cross-flow direction 432 (e.g., into/out of the page of FIG. 4).

The impingement plate 420 provides improved impingement cooling through an increase in cross-flow area 420 as described herein. The increased cross-flow area enables a lower velocity cross-flow air flow and thus impingement cooling may not be blow away as may happen in configurations such as that shown in FIG. 3.

As shown in FIG. 4, an increased cross-flow area is formed through construction of the impingement plate 420. The impingement plate 420 includes increased cross-flow structures 436 defining cross-flow cavities 434 (e.g., cavities, channels, or other flow paths that increase the cross-flow area or volume). Accordingly, the impingement plate 420 has a first portion 438 that includes the impingement hole 424 and a second portion 440 that is separated from the first portion 438 by a third portion 442. The first and third portions 438, 442 define the cross-flow cavity 434 is an open or non-closed cavity allowing for air to flow through the impingement hole 424 freely.

As shown, the second portion 440 is separated from the first portion 438 by a separation distance Y. In some embodiments, such as shown in FIG. 4, the first portion 438 and the second portion 440 are parallel or define parallel planes. The third portion 442 has a linear length extending from the first portion 438 to the second portion 440 equal to the separation distance Y. However, as will be appreciated by those of skill in the art, the third portion 442 does not have to be a structure that intersects the first or second portions 438, 440 at a ninety degree angle. That is, the third portion 442, in some embodiments, can be angled relative to the first and second portions 438, 440 or make take other shape or form (e.g., curved, bowed, etc.) while maintaining the desired separation distance Y.

Further, as shown in FIG. 4, the impingement plate 420 has a contoured second surface 428 that is defined by the increased cross-flow structures 436. The increased cross-flow structures 436 define a first distance 444 that is a length or distance between third portions 442 along the second portion 440 of a single increased cross-flow structure 436 and a second distance 446 that is a length or distance between third portions 442 along the first portion 438 between two adjacent increased cross-flow structures 436. By maximizing or otherwise selecting or defining the first distance 444, the cross-flow cavities 434 can be optimized to enable a desired impingement cooling using the impingement plate 420. In various embodiments, the second distance is greater than a diameter than the impingement hole 424.

The increased cross-flow structures 436 and the profile or contour of the impingement plate 420 define a cross-flow structure height Z, as shown. The cross-flow structure height Z is height of the first portion 438 plus the separation distance Y of the second portion 440 from the first portion 438. That is, the cross-flow structure height Z is the distance between the impingement surface 422 and the second portion 440 of the increased cross-flow structures 436.

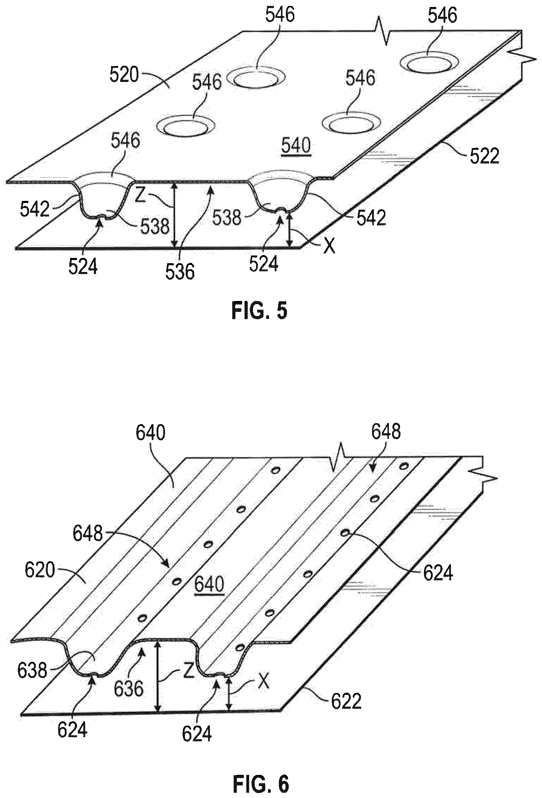

Turning now to FIG. 5, an impingement plate 520 in accordance with an example not embodying the present invention is shown. The impingement plate 520 is similar to that shown and described above with respect to FIG. 4, and includes an increased cross-flow structure 536 that defines a plurality of divots 546 that extend downward from a second portion 540 of the cross-flow structure 536 toward a first portion 538 that is formed around impingement holes 524 of the impingement plate 420. As shown, the divots 546 are defined by the first portion 538 at a position closest to an impingement surface 522 to be cooled, with the impingement holes 524 formed therein and at an impingement hole height X. A third portion 542 extends away from the first portion 538 to form sidewalls of the divots 546. The third portion 542 ends at the second portion 540, which is positioned at a cross-flow structure height Z.

As will be appreciated by those of skill in the art, the first portion 538 is minimized in surface area and the second portion 540 is maximized in surface area. Such configuration can maximize an amount of volume between the impingement plate 520 and the impingement surface 522. Further, the cross-flow structure height Z is greater than the impingement hole height X of the first portion 538.

Turning now to FIG. 6, an embodiment of an impingement plate 620 in accordance with an embodiment of the present disclosure is shown. The impingement plate 620 is similar to that shown and described above and thus similar or the same features and/or structures will not be described again. However, as illustrated, the impingement plate 620 has an increased cross-flow structure 636 that defines a plurality of channels or rails 648. The channels 648 are configured to form a continuous first portion 638 that extend along a length or direction of the impingement plate 620 and form a trough or channel in the impingement plate 620. Impingement holes 624 are formed within the first portion 638 as described above. Similarly, the second portions 640 are formed as upper limits of the channels 648. Similar to that described above, the first portion 638 is positioned at an impingement hole height X and the second portion 640 is positioned at a cross-flow structure height Z separated from an impingement surface 622.

As will be appreciated by those of skill in the art, an increased cross-flow area will be formed between the impingement plate 620 and the impingement surface 622 such that improved impingement cooling can be achieved. In the embodiment of FIG. 6, the increased cross-flow area includes the increased space or volume achieved by having the second portion 640 positioned at the cross-flow structure height Z.

Those of skill in the art will appreciate that the increased cross-flow structures of the present disclosure can take any shape, size, design, orientation, etc. That is, the various aspects or characteristics of the increased cross-flow structures can be selected, for example, based on the needs of the particular application. Further, other structures, such as serpentine channels/rails, parallel channels / rails, partial length channels / rails (e.g., a channel that has two or a few impingement holes, a plurality of such structures are formed on the impingement plate), or other configurations are possible without departing from the scope of the present disclosure.

Advantageously, embodiments described herein provide improved impingement cooling by increasing cross-flow area and volume. For example, impingement cooling efficiency may be increased through application of embodiments disclosed herein because impingement jets will blow out with less cross-flow force compared to convention impingement plates having flat surfaces or structures.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. An impingement assembly for a gas turbine engine comprising:
an impingement plate (620) having an increased cross-flow structure (636) that forms an increased cross-flow area between the impingement plate and an impingement surface (622) when the impingement plate is installed proximate to the impingement surface, the increased cross-flow structure having:
a plurality of first portions (638), each having at least one impingement hole (624) passing through the first portion, the first portion being separated from the impingement surface by an impingement hole height (X);
a plurality of second portions (640) each separated from a first portion by a separation distance and separated from the impingement surface by a cross-flow structure height (Z); and
a plurality of third portions, each extending between a first portion and a second portion,
wherein each first portion, second portion, and third portion define at least one cross-flow cavity between the impingement plate and the impingement surface, and
the cross-flow structure height is greater than the impingement hole height, **characterised in that** the increased cross-flow structure includes a plurality of channels (648) defined by the plurality of first portions (638) and the plurality of second portions (640), wherein a plurality of impingement holes (624) are formed in each of the first portions, and wherein the first portions are continuous portions that extend along a direction of the impingement plate (620) to form a trough in the impingement plate.

2. The impingement assembly of claim 1, wherein the at least one channel (648) is a serpentine channel.

3. The impingement assembly of claim 1 or 2, wherein at least one first portion and at least one second portion define parallel planes.

4. The impingement assembly of claim 3, wherein at least one third portion intersects at least one of the first portion or the second portion at a ninety degree angle.

5. The impingement assembly of claim 3, wherein at least one third portion intersects at least one of the first portion or the second portion at a non-ninety degree angle.

6. A component of a gas turbine engine (20), the component comprising:
an impingement surface to be cooling by impingement cooling; and
an impingement assembly in accordance with any preceding claim, wherein the impingement plate positioned proximate the impingement surface.

7. The component of claim 6, wherein the impingement surface is a surface of an airfoil of the gas turbine engine.

## Patentansprüche

1. Prallanordnung für ein Gasturbinentriebwerk, umfassend:
eine Prallplatte (620), die eine Struktur (636) mit erhöhter Querströmung aufweist, die einen erhöhten Querströmungsbereich zwischen der Prallplatte und einer Prallfläche (622) bildet, wenn die Prallplatte nahe der Prallfläche eingebaut ist, wobei die Struktur mit erhöhter Querströmung Folgendes aufweist:
eine Vielzahl erster Abschnitte (638), die jeweils mindestens ein Prallloch (624) aufweisen, das durch den ersten Abschnitt verläuft, wobei der erste Abschnitt von der Prallfläche durch eine Pralllochhöhe (X) getrennt ist;
eine Vielzahl zweiter Abschnitte (640), die jeweils von einem ersten Abschnitt durch einen Trennabstand getrennt sind und von der Prallfläche durch eine Höhe (Z) der Querströmungsstruktur getrennt sind; und
eine Vielzahl dritter Abschnitte, die jeweils zwischen einem ersten Abschnitt und einem zweiten Abschnitt verlaufen,
wobei jeder erste Abschnitt, zweite Abschnitt und dritte Abschnitt mindestens einen Querströmungshohlraum zwischen der Prallplatte und der Prallfläche definieren, und
die Höhe der Querströmungsstruktur größer als die Pralllochhöhe ist,
**dadurch gekennzeichnet, dass** die Struktur mit erhöhter Querströmung eine Vielzahl von Kanälen (648) beinhaltet, die durch die Vielzahl erster Abschnitte (638) und die Vielzahl zweiter Abschnitte (640) definiert sind, wobei eine Vielzahl von Pralllöchern (624) in jedem der ersten Abschnitte ausgebildet ist und wobei die ersten Abschnitte durchgehende Abschnitte sind, die entlang einer Richtung der Prallplatte (620) verlaufen, um eine Rinne in der Prallplatte zu bilden.

2. Prallanordnung nach Anspruch 1, wobei der mindestens eine Kanal (648) ein gewundener Kanal ist.

3. Prallanordnung nach Anspruch 1 oder 2, wobei mindestens ein erster Abschnitt und mindestens ein zweiter Abschnitt parallele Ebenen definieren.

4. Prallanordnung nach Anspruch 3, wobei mindestens ein dritter Abschnitt mindestens einen aus dem ersten Abschnitt oder dem zweiten Abschnitt in einem Neunziggradwinkel schneidet.

5. Prallanordnung nach Anspruch 3, wobei mindestens ein dritter Abschnitt mindestens einen aus dem ersten Abschnitt oder dem zweiten Abschnitt in einem Winkel, der nicht neunzig Grad beträgt, schneidet.

6. Komponente eines Gasturbinentriebwerks (20), wobei die Komponente Folgendes umfasst:
eine Prallfläche, die durch Prallkühlung zu kühlen ist; und
eine Prallanordnung nach einem der vorstehenden Ansprüche, wobei die Prallplatte nahe der Prallfläche angeordnet ist.

7. Komponente nach Anspruch 6, wobei die Prallfläche eine Fläche eines Schaufelprofils des Gasturbinentriebwerks ist.

## Revendications

1. Ensemble impact pour un moteur à turbine à gaz comprenant :
une plaque d'impact (620) ayant une plus grande structure à flux transversal (636) qui forme une plus grande aire à flux transversal entre la plaque d'impact et une surface d'impact (622) lorsque la plaque d'impact est installée à proximité de la surface d'impact, la plus grande structure à flux transversal ayant :
une pluralité de premières parties (638), chacune ayant au moins un trou d'impact (624) traversant la première partie, la première partie étant séparée de la surface d'impact par une hauteur de trou d'impact (X) ;
une pluralité de deuxièmes parties (640) séparées chacune d'une première partie par une distance de séparation et séparées de la surface d'impact par une hauteur de structure à flux transversal (Z) ; et
une pluralité de troisièmes parties, chacune s'étendant entre une première partie et une deuxième partie,
dans lequel chaque première partie, deuxième partie et troisième partie définit au moins une cavité de flux transversal entre la plaque d'impact et la surface d'impact, et
la hauteur de structure à flux transversal est supérieure à la hauteur de trou d'impact, **caractérisé en ce que** la plus grande structure à flux transversal comporte une pluralité de canaux (648) définis par la pluralité de premières parties (638) et la pluralité de deuxièmes parties (640), dans lequel une pluralité de trous d'impact (624) sont formés dans chacune des premières parties, et dans lequel les premières parties sont des parties continues qui s'étendent le long d'une direction de la plaque d'impact (620) pour former un creux dans la plaque d'impact.

2. Ensemble impact selon la revendication 1, dans lequel l'au moins un canal (648) est un canal en serpentin.

3. Ensemble impact selon la revendication 1 ou 2, dans lequel au moins une première partie et au moins une deuxième partie définissent des plans parallèles.

4. Ensemble impact selon la revendication 3, dans lequel au moins une troisième partie coupe au moins l'une de la première partie ou de la deuxième partie à un angle de quatre-vingt-dix degrés.

5. Ensemble impact selon la revendication 3, dans lequel au moins une troisième partie coupe au moins l'une de la première partie ou de la deuxième partie à un angle d'une autre valeur que quatre-vingt-dix degrés.

6. Composant d'un moteur à turbine à gaz (20), le composant comprenant :
une surface d'impact devant être refroidie par refroidissement par impact ; et
un ensemble impact selon une quelconque revendication précédente, dans lequel la plaque d'impact est positionnée à proximité de la surface d'impact.

7. Composant selon la revendication 6, dans lequel la surface d'impact est une surface d'une surface portante du moteur à turbine à gaz.
